# EUROPEAN PATENT SPECIFICATION

(11) **EP 2 822 758 B1**
(45) Date of publication and mention of the grant of the patent: **17.10.2018**
(21) Application number: 13716192.3
(22) Date of filing: 08.03.2013
(51) Int. Cl.: B32B 5/22, B29C 70/38, B32B 5/26, B32B 5/28, B32B 7/06, C08J 5/24, B32B 27/04

(54) **COMPOSITE MATERIAL FOR AUTOMATED LAY-UP**
VERBUNDSTOFF FÜR AUTOMATISIERTE AUFLAGE
MATÉRIAU COMPOSITE POUR EMPILAGE AUTOMATISÉ

(30) Priority: 08.03.2012 GB 201204084
(43) Date of publication of application: 14.01.2015
(73) Proprietor: Hexcel Composites Limited, Duxford, Cambridgeshire CB22 4QD (GB)
(72) Inventor: ELLIS, John, Duxford CB2 4SF (GB); FISSET, Emilie, Enfield N9 8PA (GB)
(74) Representative: Pols, Ronald Maarten
(86) International application number: PCT/EP2013/000701
(87) International publication number: WO 2013/131657

(56) References cited:
- WO-A1-2010/035021
- WO-A1-2012/010293
- WO-A2-2009/104040
- GB-A- 2 471 318
- GB-A- 2 474 897
- US-A1- 2009 269 596
- P. Urban & R. Thiel: "Papier", Römpp online 4.0 , 2016, Retrieved from the Internet: URL:https://roempp.thieme.de/roempp4.0/do/ data/RD-16-00236 [retrieved on 2017-07-27]
- IVA SARCEVIC ET AL: "Evaluation of compressive test methods for paper using a mathematical model, based on compressive test for corrugated board", ACTA GRAPHICA VOL, vol. 27, no. 1, 1 January 2016 (2016-01-01), pages 47-50, XP055460545,

## Description

### Technical field

The present invention relates to a sheet-like composite material and a process of laying down a sheet like composite material.

### Background

Composite materials have well-documented advantages over traditional construction materials, particularly in providing excellent mechanical properties at very low material densities. As a result, the use of such materials is becoming increasingly widespread and their fields of application range from "industrial" and "sports and leisure" to high performance aerospace components.

Such composite materials comprise a structural element, such as a fibre layer, impregnated with a composition comprising a resin, such as a thermosetting or thermoplastic resin.

Prepregs, comprising a fibre arrangement impregnated with curable thermosetting resin are now widely used in the preparation of such composite materials. These allow careful control of the fibre and resin quantities and provide flexibility in the shapes they can adopt.

Typically, a number of plies of such prepregs are "laid-up" as desired and the resulting laminate is cured, typically by exposure to elevated temperature, to produce a cured composite laminate.

Historically, such prepregs or similar materials, were laid-up by the hand of a skilled operator. However, modern methods of lay-up involve a significant contribution from an automated lay-up method, such as the so-called automatic tape lay-up apparatus, or ATL.

A typical ATL machine requires a roll of material which is loaded onto a mandrel and fed via a system of rollers to the ATL head. Typically the route includes a cutting stage and an optional heating stage. The cutting stage ensures that the dimensions of the material are exactly as required, as any deviation can result in an unacceptable finish. At the head of the ATL there is normally two application methods, the "shoe" of the ATL or the "compaction roller" of the ATL head. Whichever method is employed the material is brought down into contact with the surface and pressure is applied onto an uppermost backing sheet of release paper. The tacky lowermost surface adheres under pressure and the backing sheet is removed automatically. During this process the material is exposed to very high tensions of between 50 and 300 N over a typical product width of 300 mm.

In order for a prepreg or similar material to be laid down by an automated machine it needs to be prepared to an exacting specification. For convenience, such material is typically provided on a roll, ready to feed the material to the ATL apparatus.

As the composite material is generally tacky, it is necessary for the composite material to have a releasable backing sheet to prevent adhesion of adjacent layers on the roll. Such backing sheets are typically made of paper.

The backing sheet also allows the ATL apparatus to apply force to the composite material, to induce adhesion during lay-up, without the head of the apparatus adhering to the composite material.

The backing sheet is therefore typically removed only after the ATL apparatus has laid the composite material down.

In a refinement of this method, incisions can be made in the composite material by blades forming part of the ATL apparatus. Such blades are very precise and can cut through the composite material and penetrate a short distance (i.e. a fraction of a millimetre) into the backing paper. A partial incision into the backing layer is preferred to completely cut the composite material whilst maintaining a continuous backing sheet to take tension along the length of the tape. The operator will aim for example, to cut up to approximately 10% of the thickness of the backing layer. Typically an ultrasonic cutter or a mechanical blade is used to cut the material. The cutting of the ATL tape has the effect that shapes and contours can be introduced, giving flexibility to the range of lay-up designs the ATL apparatus can cope with.

In a typical method, when an incision is made through the backing sheet, the "shoe" of the ATL apparatus is lifted upwards at the "compaction roller" moves into place to ensure that the portions of the composite material to one side of the incisions are not laid down and are instead carried off remaining attached to their backing sheet as waste.

Once the portion containing the incisions has been laid down, the ATL lifts the compaction roller and lowers the shoe simultaneously, to resume normal operation of laying down the whole composite material.

However, such transitions often involve spikes of tensional force on the composite material. Such forces are also magnified during periods where incisions are made through the backing paper. Problematically, it is precisely when the composite material has been cut and weakened when the tensional spikes tend to accumulate, e.g. as the shoe and compaction rollers change over, resulting in breakage of the backing layer.

The cutting of the composite results in a partial incision in the backing sheet layer, but sometimes this may also be a complete incision whereby the backing layer is cut at the edges where there is a tendency for the tape to curl. The partial incision has the effect of introducing a point of weakness, or stress concentration into the backing sheet. The result of this is a tendency for the backing sheet to tear and fail. A tear in the backing sheet prevents the ATL system from continuously feeding more ATL tape, which requires the automated process to be shut down while the failed material is removed. This increases cost and reduces the efficiency of the process. Failure of the backing layer also results in increased waste as a new length of tape has to be passed through the ATL machine to resume continuous feeding, additionally the length of tape deposited prior to the break has to be removed and replaced. Additionally a break in the backing sheet may result in contaminating fragments from the backing sheet being introduced into the lay-up.

Thus, any way in which this problem could be addressed would be highly desirable.

WO 2009/104040 discloses a composite tape for use in automated tape laying machines.
WO 2012/010293 discloses improvements in composite materials.

### Summary of Invention

According to the present invention, there is provided a sheet like composite material and a process as defined in any one of the accompanying claims.

In a first aspect, the invention relates to a sheet-like composite material comprising a structural layer and curable thermosetting resin, and comprising a fibre-reinforced backing paper on one of its external faces; the fibre-reinforced backing paper comprising a cellulose paper and fibre reinforcement in the backing paper.

It has been found that by including fibre reinforcement in the backing paper then the burst strength and resistance to tear is greatly improved, thus improving the efficiency, reducing down time, waste and contamination of the ATL process, when such a material is laid down.

Although this approach solves a significant problem, it has been found that the introduction of reinforcing fibres into the backing paper can result in the transfer of a pattern of the fibres into the resin of the composite material. For some applications this is undesirable, and a pattern-free material is required.

It has been further found that such pattern transfer can be significantly reduced or eliminated entirely, by the introduction of a second backing paper between the fibre-reinforced backing paper and the rest of the composite material. The second backing paper does not contain fibre reinforcement, and protects the rest of the composite material from the fibre reinforcement pressing into the resin.

It has been found that pattern transfer can be further reduced or eliminated if the second backing paper is relatively incompressible. For example a highly calendered paper such as glassine paper may be used. In addition the entire backing layer may be compressed during assembly and prior to application to the composite material, thus decreasing its compressibility once applied to the composite material.

It has also been found that for some applications the transfer of fibre patterns into the resin surface may introduce venting pathways for air and volatiles, which can result in a beneficial reduction of porosity of the final laminate. Therefore in an alternative embodiment of the present invention the backing sheet layer comprises a compressible second backing paper such as craft paper. A compressible second backing paper will deform around the underlying fibres thus patterning the adjacent resin. Furthermore the compressibility, weave pattern and diameter of the underlying fibres can also be adjusted to vary the size and number of patterned venting pathways.

However, introducing a second backing paper also introduces the risk that other problems may be introduced such as wrinkles and curl. Such problems occur because of relative expansions, particularly during storage and in a varying humidity environment. Relative expansion between the two layers can result in a curling action or wrinkling of the papers, which are both highly undesirable.

Thus it may be preferable to include a third backing paper to prevent such curling or wrinkling. The third backing paper can feasibly be inserted into any location within the backing sheet, however it is preferably sandwiched between the second and first backing papers.

The structural layer of the composite material can be any solid material capable of being impregnated with the thermosetting resin.

The structural layer could include a porous metal sheet such as an expanded foil, or it could include a structural layer of fibres.

Suitable metals for use as an expanded foil include any electrically conductive metal, such as bronze, aluminium, copper, silver, gold, nickel, zinc and tungsten. Copper is preferred due to its excellent electrical conductivity. Any fibres in the structural fibre layers may be unidirectional, fabric form, random or multi-axial. In one preferred embodiment, the fibres are unidirectional. Following lay-up their orientation will typically vary throughout the composite material, e.g. prepreg or semipreg, for example by arranging for the fibres in neighbouring layers to be orthogonal to each other in a so-called 0/90 arrangement, signifying the angles between neighbouring fibre layers. Other arrangements such as 0/+45/-45/90 are of course possible among many other arrangements.

Any of the above discussed first, second and third backing papers and reinforcing fibres may be applied in any desired order. Preferably the second backing paper is adjacent to the structural layer and adjacent to the second backing paper is the reinforcing fibres and/or third backing paper, finally the first backing paper is placed on the uppermost of either of the third paper backing or fibre reinforcement.

The structural fibres may comprise cracked (i.e. stretch-broken), selectively discontinuous or continuous fibres.

The structural fibres may be made from a wide variety of materials such as glass, carbon, graphite, metallised polymers aramid and mixtures thereof. The composite material typically comprises from 30 to 70 wt % structural fibres.

As discussed above, the composite materials of the present invention comprise a curable thermosetting resin. The curable resin may be present as a discrete layer or may be fully or partially impregnated into a layer of structural fibres. The composite material typically comprises from 15 to 50 w.t % curable resin or more preferably 32 to 45 wt. % curable resin.

The curable resin may be selected from those conventionally known in the art, such as resins of phenol-formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof.

Particularly preferred are epoxy resins, for example monofunctional, difunctional or trifunctional or tetrafunctional epoxy resins.

The epoxy resin may comprise monofunctional, difunctional, trifunctional and/or tetrafunctional epoxy resins.

Suitable difunctional epoxy resins, by way of example, include those based on; diglycidyl ether of Bisphenol F, Bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, or any combination thereof.

Difunctional epoxy resins may be preferably selected from diglycidyl ether of Bisphenol F, diglycidyl ether of Bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl ethers, epoxidised olefins, brominated resins, triglycidyl aminophenyls, aromatic glycidyl amines, heterocyclic glycidyl imidines and amides, glycidyl ethers, fluorinated epoxy resins, or any combination thereof.

Suitable tetrafunctional epoxy resins include N,N,N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY721 from Huntsman Advanced Materials).

The thermosetting resin may also comprise one or more curing agent. Suitable curing agents include anhydrides, particularly poly carboxylic anhydrides; amines, particularly aromatic amines e.g. 1,3-diaminobenzene, 4,4'-diaminodiphenylmethane, and particularly the sulphones, e.g. 4,4'-diaminodiphenyl sulphone (4,4' DDS), and 3,3'-diaminodiphenyl sulphone (3,3' DDS), and the phenol-formaldehyde resins. Preferred curing agents are the amino sulphones, particularly 4,4' DDS and 3,3' DDS.

Further examples of the type and design of the resin and fibres can be found in WO 2008/056123.

The fibre reinforcement in the backing paper can take a wide variety of forms, for example they can be woven, knitted, random or spunlaced. Preferably the fibres are woven as this provides good strength without excessive protrusions being introduced to the backing paper, a woven fabric ensures that the fibres have a regular arrangement. This has been found to provide improved attenuation of tears propagating in the backing sheet. Furthermore it is preferable that the fibre reinforcement in the backing sheet is made from continuous fibres, therefore when a fibre is cut it is securely anchored within the backing sheet. With a random mat or sheet of discontinuous fibres it is likely small fragments may be produced if cut, which may contaminate the lay-up.

In an embodiment, the fibre reinforcement of the backing paper may comprise a thermoplastic fibre, such a polyethylene, polyethersulphone, nylon, Kevlar, other thermoplastic fibres well known to the art, glass, carbon, graphite, basalt or other synthetic fibres and natural fibres including flax, jute, cotton and the like. In a preferred embodiment the fibre reinforcement comprises polyethylene. Preferably the fibre is woven into a fabric, and in a preferred embodiment it is woven into a 3 directional grid.

In an embodiment the fibre reinforcement is woven into a fabric having a warp and weft direction of fibres. In an embodiment the warp fibres may be aligned substantially parallel with the lengthwise direction of the structural layer tape. Alternatively they warp may be arranged at an angle to the lengthwise direction e.g. at +/- 45°.
Preferably the fibre reinforcement is a layer having an areal weight of 4 to 100 gsm, or more preferably 10 to 60 gsm (g/m²), or more preferably 5 to 30 gsm (g/m²), or more preferably 12 to 24 gsm (g/m²) or more preferably still, of 17 to 19 gsm (g/m²).

The first backing paper comprises cellulose paper. The first backing paper preferably comprises a silicone coating, to prevent the outermost surface of the backing layer adhering to the structural layer when wound onto a roll. Preferably the backing layer has an areal weight of 25 to 100 gsm (g/m²), or more preferably 34 to 66 gsm (g/m²) or more preferably 44 to 56 gsm (g/m²), or more preferably still 48 to 52 gsm (g/m²).
Preferably the second backing paper comprises a polymer sheet, or more preferably a cellulose paper. The second backing paper preferably comprises a silicone coating to reduce the adhesive force between the structural layer and the backing sheet allowing the two to be separated during ATL placement. Preferably the backing layer has an areal weight of 25 to 100 gsm (g/m²), or more preferably 34 to 66 gsm (g/m²) or more preferably 44 to 56 gsm (g/m²), or more preferably still 48 to 52 gsm (g/m²).
The third backing paper may comprise any material suitable for the first or second backing papers. Preferably the third backing paper comprises a polymeric sheet such as polyamide, polyether-terephthalate, polyethersulphones, acrylate polymers, polyesters, or copolymers thereof. Most preferably the polymeric sheet comprises polyethylene.
Preferably the third backing paper has an areal weight of 5 to 100 gsm (g/m²), or more preferably 10 to 50 gsm (g/m²), or more preferably 20 to 34 gsm (g/m²), or more preferably still 23 to 27 gsm (g/m²).

The backing paper which comprises any of a first, second, or third backing paper and a fibre reinforcement, preferably has a combined thickness of 50 to 500 µm, or more preferably 100 to 400 µm, or more preferably 150 to 300 µm or more preferably still, 75 to 225 µm when measured using NFQ03019 or ASTM D646.

Preferably the backing paper exhibits a machine direction mechanical resistance of at least 5 daN/15mm, or more preferably 10 daN/15mm or more preferably still at least 15 daN/15mm when assessed under ASTM D828. Preferably the backing paper exhibits a mechanical resistance in the direction transverse to the machine direction of at least 3 daN/15mm, or more preferably at least 5 daN/15mm or more preferably still at least 9 daN/15mm when assessed using ASTM D828.

Preferably the backing paper exhibits a machine direction tear resistance of at least 1.0 daN/15mm, or more preferably at least 2.0 daN/15mm or more preferably still at least 3.0 daN/15mm when assessed under TAPPI T470. Preferably the backing paper exhibits a tear resistance in the direction transverse to the machine direction of at least 1 daN/15mm, or more preferably 2.0 daN/15mm or more preferably still 2.5 daN/15mm when assessed using TAPPI T470.

Preferably the backing paper exhibits a bursting strength of at least 200KPa, or more preferably 400KPa when assessed using ASTM D774. Preferably the backing sheet exhibits a water vapour transmission rate of greater than 50 g/m²/24h or more preferably greater than 100 g/m²/24h.

The machine direction is the lengthwise direction of the ATL tape, i.e. the direction parallel to the process direction used by the ATL system.

The composite material of the present invention may include additional materials as desired, such as performance enhancers or modifying agents. Such materials may be selected from flexibilisers, toughening agents/particles, additional accelerators, core shell rubbers, flame retardants, melting agents, pigments/dyes, plasticisers, UV absorbers, anti-fungal components, fillers, viscosity modifiers/flow control agents, stabilisers and inhibitors.

However, preferably the composite material has a thickness of from 0.5 to 5.0mm, more preferably 0.5 to 4.0mm, most preferably from 1.0 to 3.0mm, so that it can be conveniently handled by the ATL apparatus.

As the composite material is intended to be provided in the form of a roll, preferably it is sufficiently flexible so as to be able to form a roll with a minimum diameter of less than 20cm, preferably less than 10cm, or more preferably less than 250 mm when the backing sheet is applied to the composite material or less than 70 mm when it is applied to a resin film.

The composite material according to the invention can be prepared by any known method in the art. Such methods typically involve bringing together the structural layer and thermosetting resin and impregnating the structural layer with the resin. Once prepared the composite material is typically rolled up ready for deposition by an ATL apparatus.

Thus, in a second aspect, the invention relates to a process of laying down onto a substrate, a composite material as described herein, which is fed automatically from a roll to the substrate such that the backing paper is uppermost, and the composite material adhering to the substrate by application of pressure onto the backing paper by a tool, followed by removal of the backing paper, leaving the composite material in place on the substrate without its backing paper.

In a preferred embodiment the process involves cutting through the structural layer and partially into the backing paper layer prior to laying down the composite material.

In this case it is important that the cutters do not cut so deep into the backing paper that the reinforcing yarns are also cut, otherwise the tear properties of the backing paper will be greatly reduced.

This process is typically followed by the subsequent placement of additional composite material, such as prepregs, to generate a stack of composite material.

Once the composite material has been laid down, the arrangement is cured by exposure to elevated temperature, and optionally elevated pressure, to produce a cured composite material.

The invention will now be illustrated, by way of example only, and with reference to the following figures, in which:
Figure 1 is a schematic representation of reinforced backing paper for use in the present invention.
Figure 2 is a schematic representation of another reinforced backing paper for use in the present invention.
Figure 3 is a sectional view through a composite material according to the present invention.
Figure 4 is a sectional view through another composite material according to the invention.
Figure 5 is a side view of an ATL apparatus for use in the process according to the present invention.
Figure 6 is schematic representation of a backing paper according to the present invention which has failed by tearing following cutting during lay-up.
Figure 7 is a sectional view of the composite material during cutting prior to the tearing shown in figure 6.
Figure 8 is a sectional view of composite material during cutting which did not result in the tearing as shown in figure 6.

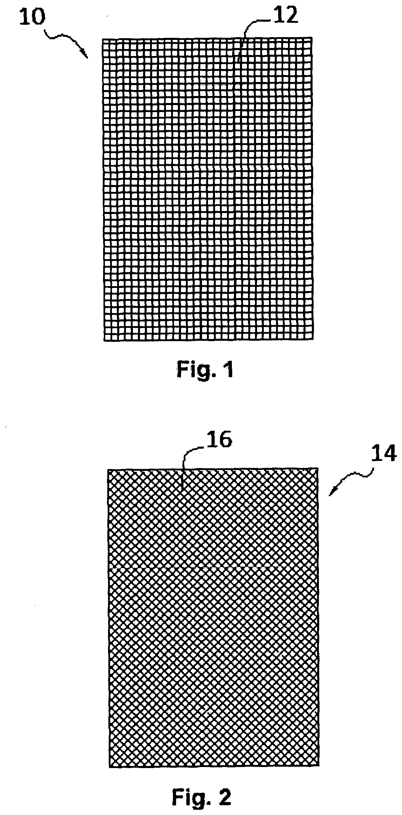

Turning to the figures, Figure 1 shows a sheet 10 of backing paper reinforced with woven cotton yarns 12. The cotton yarns are woven in a regular weave and the warp and weft are aligned in the 0° and 90° directions respectively.

Figure 2 shows another sheet 14 of backing paper reinforced with woven yarns which have a different pattern.

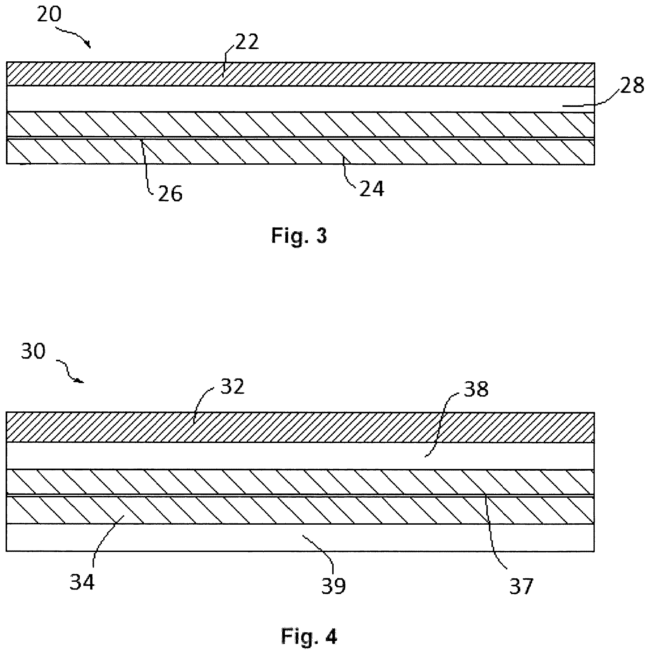

Figure 3 shows a composite material 20 according to the present invention. The composite material 20 comprises a layer of prepreg 22 comprising a structural layer of unidirectional fibres (not shown) impregnated with a thermally curable epoxy resin. Attached to this is a two-layer backing paper comprising a backing paper 24 reinforced with woven cotton yarns 26 and a second backing paper 28 free of woven yarns and being super-calendared so that it has a very low compressibility.

Figure 4 shows another composite material 30 according to the present invention. The composite material 30 comprises a layer of prepreg 32 comprising a structural layer of unidirectional fibres (not shown) impregnated with a thermally curable epoxy resin. Attached to this is a three-layer backing paper comprising a backing paper 34 reinforced with woven cotton yarns 37, a second backing paper 38 free of woven yarns and being super-calendared so that it has a very low compressibility, and a third backing paper 39.

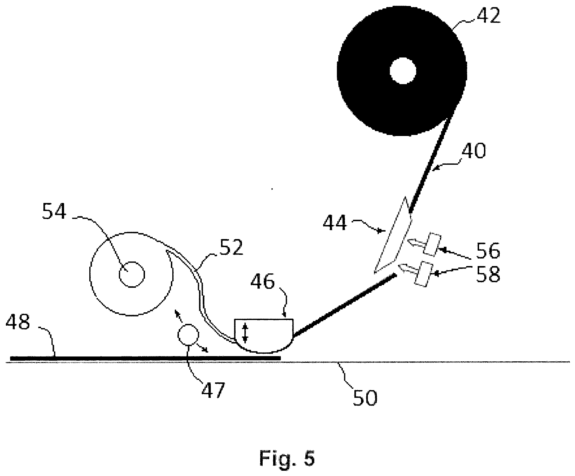

Figure 5 shows a side view of an ATL apparatus laying down a composite material according to the present invention. The composite material 40 is fed from a roll of material with a central core 42, past a cutting station 44 to the ATL head 46. Following lay-up the prepreg 48 adheres preferentially to the substrate 50 and the backing paper 52 is removed onto take-up roller 54.

In normal operation no cutting of the prepreg occurs and lay-up is carried out by the head 46 pressing down onto the composite material.

When cuts are desired then head 46 lifts up and compaction roller 47 moves down to come into contact with the already laid-down prepreg 48. This has the effect that the part of the prepreg cut away is not laid down but remains attached to the backing paper and is taken up by take-up roller 54. The change-over of head and roller introduces tension peaks in the composite material, which can trigger tearing of the backing paper.

Once cutting ceases the compaction roller 47 is lifted away from contact with the prepreg 48 and head 46 moves down once again to continue lay-up by applying pressure onto the backing paper 52.

The cutting station 44 comprises two ultrasonic cutting devices 56, 58 which can be programmed to cut through the prepreg 48 and partially into the backing paper 52. The cutters 56, 58 are programmed to penetrate 10% of the thickness of the backing paper, so as to ensure that the prepreg is entirely cut through without weakening the backing paper too much. Additionally, care must be taken not to cut through the reinforcing yarns, as this will remove any tear strength they would have provided.

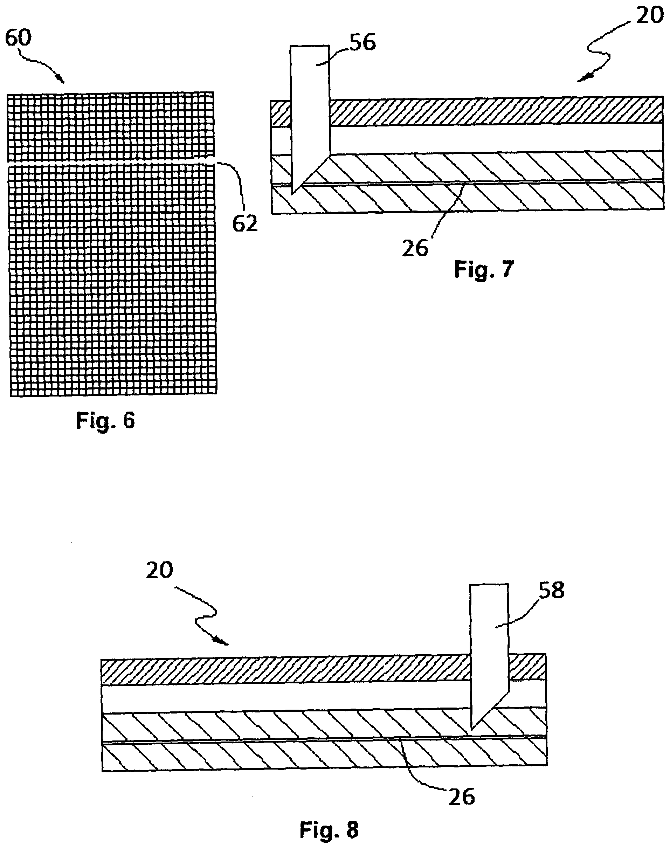

Figure 6 shows a reinforced paper backing sheet 60 for use according to the present invention. However, as shown in figure 7, cutter 56 has been set to cut too deeply through the backing paper and has cut through the reinforcing yarns 26. This has resulted in a tear 62, resulting in the lay-up process being shut down while the material is reconfigured.

Figure 8 shows the correct setting for the cutter 58, wherein the cutter 58 does not cut through yarns 26. This backing paper does not fail when used in the ATL process, even during periods of cutting.

The invention will now be clarified by reference to the following example.

### Example

A backing sheet was assembled comprising the following layers in the below order:
First backing paper: high calandered glassine paper of 50g/m²
Third backing paper: polyethylene sheet of 24g/m²
Fibre reinforcement: A woven directional polyethylene grid of 18g/m²
Second backing paper: high calandered glassine paper of 50g/m²

The backing sheet was assembled by compression using nip rollers before a silicone coating was applied to the external surfaces. The backing sheet underwent mechanical testing, the results of which are listed in Table 1:

**Table 1. Results of mechanical testing.**

| Test | International Standard | Result |
|---|---|---|
| Mechanical resistance | ASTM D828 - NFQ03004 | ≥ 16 daN/15mm parallel to machine direction |
| | | ≥ 9.5 daN/15mm transverse to machine direction |
| Tear resistance | TAPPI T470 | ≥ 3.0 daN/15mm parallel to machine direction |
| | | ≥ 2.5 daN/15mm transverse to machine direction |
| Bursting strength | ASTM D774 - NFQ03053 | ≥400 KPa |
| Water vapour transmission rate | ASTM F 1249 (38°-90%HR) | ≤ 100 g/m²/24h |

The second paper backing of the backing sheet was brought into contact with a layer of M21/EV prepreg (Hexcel Composites Ltd. Duxford UK) and consolidated using nip rollers, this was then slit and rolled to form ATL compatible tape.

The ATL tape was loaded into an ATL system, and deposited onto a mould surface. The prepreg and backing layer demonstrated good tack to the mould surface, as well as good tack to subsequent layers of prepreg. The tape was cut at 90° to the tape direction using the cutting apparatus integrated into the ATL system, the prepreg was cut cleanly and the backing layer remained uncut and suitable for continued feeding of the ATL tape, thus demonstrating compatibility of the backing sheet with ATL lay-up.

## Claims

1. A sheet-like composite material comprising a structural layer and curable thermosetting resin, and comprising a fibre-reinforced backing paper on one of its external faces; the fibre-reinforced backing paper comprising a cellulose paper and fibre reinforcement in the backing paper.

2. A sheet-like composite material according to claim 1, which comprises a second backing paper between the fibre-reinforced backing paper and the rest of the composite material.

3. A sheet-like composite material according to any one of the preceding claims, wherein the structural layer comprises a metal expanded foil.

4. A sheet-like composite material according to any one of the preceding claims, wherein the structural layer comprises a structural layer of fibres.

5. A sheet-like composite material according to claim 4, wherein the fibres are unidirectional.

6. A sheet-like composite material according to claim 4 or claim 5, which comprises from 30 to 70 wt % structural fibres.

7. A sheet-like composite material according to any one of the preceding claims, wherein fibre reinforcement in the backing sheet are woven.

8. A sheet-like composite material according to any one of the preceding claims having a thickness of from 0.5 to 5.0mm, preferably 0.5 to 4.0mm, more preferably from 1.0 to 3.0mm.

9. A sheet-like composite material according to any one of the preceding claims which is sufficiently flexible so as to be able to form a roll with a diameter of less than 20cm, preferably less than 10cm.

10. A process of laying down a sheet like composite material according to any one of the preceding claims onto a substrate, which is fed automatically from a roll to the substrate such that the backing paper is uppermost, and the composite material adheres to the substrate by application of pressure onto the backing paper by a tool, followed by removal of the backing paper, leaving the composite material in place on the substrate without its backing paper.

11. A process according to claim 10, which comprises the step of cutting through the structural layer and partially into the backing paper layer prior to laying down the composite material.

12. A process according to claim 11, wherein the cutting is does not cut through the reinforcing yarns in the backing paper.

13. A process according to any one of claims 10 to 12, which is followed by the subsequent placement of additional composite material to generate a stack of composite material.

14. A process according to any one of claims 10 to 13, which is followed by curing by exposure to elevated temperature, and optionally elevated pressure, to produce a cured composite material.

## Patentansprüche

1. Flächiger Verbundstoff, der eine Strukturschicht und aushärtbares, duroplastisches Harz umfasst und ein faserverstärktes Trägerpapier auf einer seiner Außenseiten umfasst, wobei das faserverstärkte Trägerpapier ein Zellulosepapier und Faserverstärkung im Trägerpapier umfasst.

2. Flächiger Verbundstoff nach Anspruch 1, der ein zweites Trägerpapier zwischen dem faserverstärkten Trägerpapier und dem Rest des Verbundstoffs umfasst.

3. Flächiger Verbundstoff nach einem der vorhergehenden Ansprüche, wobei die Strukturschicht eine Streckmetallfolie umfasst.

4. Flächiger Verbundstoff nach einem der vorhergehenden Ansprüche, wobei die Strukturschicht eine Strukturschicht von Fasern umfasst.

5. Flächiger Verbundstoff nach Anspruch 4, wobei die Fasern unidirektional sind.

6. Flächiger Verbundstoff nach Anspruch 4 oder Anspruch 5, der von 30 bis 70 Gew.-% Strukturfasern umfasst.

7. Flächiger Verbundstoff nach einem der vorhergehenden Ansprüche, wobei die Faserverstärkung in der Trägerfolie gewebt ist.

8. Flächiger Verbundstoff nach einem der vorhergehenden Ansprüche, der eine Dicke von 0,5 bis 5,0 mm, vorzugsweise 0,5 bis 4,0 mm, mehr bevorzugt von 1,0 bis 3,0 mm aufweist.

9. Flächiger Verbundstoff nach einem der vorhergehenden Ansprüche, der genügend flexibel ist, sodass er eine Rolle mit einem Durchmesser von weniger als 20 cm, vorzugsweise weniger als 10 cm, bilden kann.

10. Verfahren für die Auflage eines flächigen Verbundstoffs nach einem der vorhergehenden Ansprüche auf ein Substrat, der automatisch von einer Rolle dem Substrat so zugeführt wird, dass das Trägerpapier ganz oben ist und der Verbundstoff durch Aufbringen von Druck auf das Trägerpapier mit einem Werkzeug, gefolgt von Entfernen des Trägerpapiers, sodass der Verbundstoff ohne sein Trägerpapier auf dem Substrat zurückbleibt, am Substrat haftet.

11. Verfahren nach Anspruch 10, das den Schritt des Schneidens durch die Strukturschicht und teilweise in die Trägerpapierschicht vor Auflegen des Verbundstoffs umfasst.

12. Verfahren nach Anspruch 11, wobei das Schneiden nicht die Verstärkungsgarne im Trägerpapier durchschneidet.

13. Verfahren nach einem der Ansprüche 10 bis 12, dem die anschließende Platzierung von zusätzlichem Verbundstoff folgt, um eine Aufschichtung von Verbundstoff zu erzeugen.

14. Verfahren nach einem der Ansprüche 10 bis 13, dem Aushärten durch Exposition gegenüber erhöhter Temperatur und wahlweise erhöhtem Druck folgt, um einen ausgehärteten Verbundstoff zu erzeugen.

## Revendications

1. Matériau composite en feuille comprenant une couche structurale et une résine thermodurcissable, et comprenant un papier de support renforcé par des fibres sur l'une de ses faces extérieures ; le papier de support renforcé par des fibres comprenant un papier de cellulose et un matériau de renforcement fibreux dans le papier de support.

2. Matériau composite en feuille selon la revendication 1, comprenant un deuxième papier de support entre le papier de support renforcé par des fibres et le reste du matériau composite.

3. Matériau composite en feuille selon l'une quelconque des revendications précédentes, dans lequel la couche structurale comprend une feuille métallique déployée.

4. Matériau composite en feuille selon l'une quelconque des revendications précédentes, dans lequel la couche structurale comprend une couche structurale de fibres.

5. Matériau composite en feuille selon la revendication 4, dans lequel les fibres sont unidirectionnelles.

6. Matériau composite en feuille selon la revendication 4 ou la revendication 5, comprenant de 30 à 70 % en poids de fibres structurales.

7. Matériau composite en feuille selon l'une quelconque des revendications précédentes, dans lequel le matériau de renforcement fibreux dans la feuille de support est tissé.

8. Matériau composite en feuille selon l'une quelconque des revendications précédentes, ayant une épaisseur de 0,5 à 5,0 mm, préférablement de 0,5 à 4,0 mm, plus préférablement de 1,0 à 3,0 mm.

9. Matériau composite en feuille selon l'une quelconque des revendications précédentes, lequel est suffisamment flexible pour pouvoir former un rouleau d'un diamètre inférieur à 20 cm, préférablement inférieur à 10 cm.

10. Procédé de pose d'un matériau composite en feuille selon l'une quelconque des revendications précédentes sur un substrat, qui est amené automatiquement à partir d'un rouleau vers le substrat de telle sorte que le papier de support se trouve sur le dessus, et le matériau composite adhérant au substrat sous l'effet d'une pression appliquée sur le papier de support par un outil, avec ensuite un retrait du papier de support, en laissant le matériau composite en place sur le substrat sans son papier de support.

11. Procédé selon la revendication 10, lequel comprend une étape de coupe à travers la couche structurale et en partie dans la couche de papier de support avant la pose du matériau composite.

12. Procédé selon la revendication 11, dans lequel la coupe ne coupe pas à travers les fils de renforcement présents dans le papier de support.

13. Procédé selon l'une quelconque des revendications 10 à 12, lequel est suivi d'une pose ultérieure d'un matériau composite additionnel pour produire une superposition de matériau composite.

14. Procédé selon l'une quelconque des revendications 10 à 13, lequel est suivi d'un durcissement par exposition à une température élevée et optionnellement à une pression élevée, pour produire un matériau composite durci.
